# EUROPÄISCHE PATENTANMELDUNG

(11) **EP 0 606 544 A2**
(43) Veröffentlichungstag der Anmeldung: **20.07.1994**
(21) Anmeldenummer: 93117236.5
(22) Anmeldetag: 25.10.1993
(51) Int. Cl.: F16D 3/78, F16D 3/68

(54) **Kupplungselement zum Übertragen von Drehmomenten und Verfahren zu dessen Herstellung**

(30) Priorität: 22.12.1992 DE 4243447
(71) Anmelder: HÜLS AKTIENGESELLSCHAFT, D-45764 Marl (DE)
(72) Erfinder: Monsheimer, Sylvia, D-45470 Mülheim (DE); Hartmann, Matthias, D-45699 Herten (DE); Baron, Christian, Dr., D-45721 Haltern (DE)

(57) **Zusammenfassung**

Das Kupplungselement besteht aus mehreren Kammern (1) zum Ein- und Ausleiten des Drehmomentes und dazwischen liegenden Bereichen (3) aus elastischem Material, in die Versteifungseinlagen (4,5) in Form von Streifen oder als verstrebtes Netzwerk eingebettet sind, die mit dem elastischen Material fest verbunden sind. Alle Versteifungseinlagen (4,5) für ein Kupplungselement werden zunächst einstückig hergestellt; im fertigen Kupplungselement werden sie nur durch das elastische Material zusammengehalten.

## Beschreibung

Die Erfindung betrifft ein drehelastisches scheibenartiges Kupplungselement, mit dem ein Drehmoment von einem das Drehmoment erzeugenden Teil auf ein das Drehmoment aufnehmenden Teil übertragen wird.

Das Kupplungselement dient z. B. als Zwischenring in einer Zwischenring-Kupplung. Derartige Kupplungen haben eine mittlere bis hohe Elastizität im Vergleich zu starren Kupplungen; sie verringern Drehmoment-Stöße, dämpfen Schwingungen und gleichen Wellenverlagerungen aus. Der Zwischenring wird mit dem Antriebs- und dem Abtriebsflansch verbunden oder diese Flansche greifen über vorstehende Klauen in den Zwischenring ein.

Die Erfindung bezweckt, derartige Kupplungselemente wirtschaftlicher herzustellen und ihr Gebrauchsverhalten zu verbessern.

Aus DE-27 05 598 ist eine elastische Gelenkscheibe für Wellenkupplungen bekannt, deren Büchsen paarweise von Fadenwickeln umschlungen und zusammen mit diesen in einen elastomeren Werkstoff eingebettet sind. Einige Büchsen bestehen aus einer Außenbüchse und aus einer dazu - in Umfangsrichtung gesehen - exzentrisch angeordneten Innenbüchse; der Zwischenraum ist - vollständig oder bereichsweise - mit einem elastomeren Werkstoff gefüllt. Zwischen der Außenbüchse und der Innenbüchse kann eine Zwischenbüchse angeordnet sein. Die Fadenwickel werden erst ab einem bestimmten Drehwinkel auf Zug belastet, wodurch eine mit dem Drehwinkel relativ plötzlich ansteigende Verdrehsteifheit der Gelenkscheibe erreicht wird. Die in beiden Drehrichtungen unterschiedlich große Verdrehsteifheit der Gelenkscheibe wird - bei symmetrisch angeordneten Fadenwickeln - durch zusätzliche aufwendige Konstruktionselemente erreicht. Die Fadenwickel werden von Hand eingelegt. Wegen der runden Büchsen wird der elastomere Werkstoff ungleichmäßig belastet, wodurch die Lebensdauer der Gelenkscheibe verkürzt wird.

In DE-42 04 973 wird eine Gelenkscheibe beschrieben, die zwischen zwei gleichachsigen Wellenflanschen einsetzbar ist, mit für die Befestigung an den beiden Wellenflanschen konzentrisch angeordneten Hülsen versehen ist, wobei die Hülsen durch elastische Mittel miteinander verbunden sind. Sowohl die Hülsen als auch die sie verbindenden elastischen Mittel sind in einen elastomeren Werkstoff eingebettet. Diese Gelenkscheibe enthält ein die Hülsen und etwaige weitere Teile aufnehmendes Basisskelett aus dem elastischen Mittel, bevorzugt aus Kunststoff, in Form eines Direktverbundes, das anschließend mit Kautschuk umspritzt wird, der danach vulkanisiert wird. Nach dem Spritzgießen liegt ein von dem Kunststoff völlig eingeschlossener Hülsenverbund vor; dieses Basisskelett bleibt mit allen Teilen in der fertigen Gelenkscheibe erhalten. Im Gegensatz dazu kann das Basisskelett aus mehreren mit den Hülsen versehenen vorgefertigten Segmenten zusammengesetzt sein, die durch vulkanisierten Kautschuk miteinander verbunden sind.

Der haftvermittlerfreie Verbund aus Kunststoff und Kautschuk ist aus der Literatur bekannt. Zwischenschritte wie Oberflächenbehandlung oder das Auftragen eines Haftvermittlers sind dabei nicht erforderlich.

Aufgabe dieser Erfindung ist, ein Kupplungselement zu entwickeln, das mit vertretbarem Aufwand hergestellt werden kann und das die Anforderungen möglichst gut erfüllt.

Diese Aufgabe wird erfindungsgemäß gelöst durch ein Kupplungselement zum Übertragen von Drehmomenten, bestehend aus mindestens zwei Kammern zum Einleiten und mindestens zwei Kammern zum Ausleiten des Drehmomentes, zwischen denen insgesamt mindestens vier Bereiche liegen, durch die hindurch das Drehmoment übertragen wird, wobei diese Bereiche aus einem elastischen Material bestehen und mindestens zwei Bereiche jeweils mindestens eine Versteifungseinlage enthalten, die mit dem elastischen Material fest verbunden ist.

Bei vier Bereichen aus elastischem Material liegen die beiden Bereiche mit mindestens einer Versteifungseinlage einander gegenüber.

Jeder Bereich aus elastischem Material kann mehrere Versteifungseinlagen enthalten; diese können aus Metall (Eisen oder Nichteisen-Metalle) oder aus einem thermoplastischen Kunststoff wie Polyamid, Polyolefin, speziell Poly-phenylen-ether, aus einem Faserverbundwerkstoff, wie z. B. Epoxidharz mit Glasgeweben oder Faserverbundwerkstoffen aus Glas-, Kohlenstoff- oder Aramidfasern und thermoplastischen Matrizes aus den obengenannten Thermoplasten bestehen.

Als elastisches Material sind vulkanisierter Natur- oder Synthesekautschuk, wie z. B. Styrol-Butadien-Kautschuk (SBR), Isopren-Kautschuk (IR), Ethylen-Propylen-Dienpolymerisat (EPDM), Butyl-Kautschuk (IIR), Acrylnitril-Butadien-Kautschuk (NBR), Ethylen-Propylen-Copolymer (EPM) und Mischungen aus den genannten Kautschuken oder ein thermoplastisches Elastomer, z. B. Polyethylen-Block-Copolymer geeignet.

Besonders geeignet sind die Kombinationen Poly-phenylen-ether mit SBR sowie Polyamid mit carboxyliertem NBR oder EPM, die einen haftvermittlerfreien Verbund ermöglichen (siehe EP 0 196 407, EP 0 315 749, EP 0 344 427 sowie EP 0 422 358).

Die Versteifungseinlagen können bevorzugt radial angeordnete Streifen sein oder die Form eines verstrebten Netzwerkes haben. Die Versteifungseinlagen können - je nach Richtung des Drehmomentes - in den Bereichen aus elastischem Material unterschiedlich verteilt sein. Die Abmessungen der Versteifungseinlagen können in Richtung des übertragenen Drehmomentes konstant sein oder mit zunehmendem Radius des Kupplungselementes größer werden; sie können der Kammerform angepaßt sein.

Das Verhältnis des Querschnittes von elastischem Material zum Querschnitt der Versteifungseinlagen in einer in Umfangsrichtung verlaufenden Schnittfläche beträgt 1 zu 10 bis 10 zu 1, bevorzugt 1 zu 3 bis 3 zu 1.

Eine spezielle Ausführungsform des Kupplungselementes enthält Bereiche aus elastischem Material, das aus einer vulkanisierten Mischung von z. B. 60 % Naturkautschuk und 40 % Styrol-Butadien-Kautschuk sowie den üblichen Füll- und Hilfsstoffen besteht, wobei drei dieser Bereiche jeweils vier Schichten aus elastischem Material und drei streifenförmige Versteifungseinlagen enthalten, und damit abwechselnd die drei anderen Bereiche jeweils drei Schichten aus elastischem Material und zwei streifenförmige Versteifungseinlagen enthalten, und die Versteifungseinlagen aus Poly-phenylen-ether bestehen und mit dem elastischen Material fest verbunden sind.

Die Kammern können einen fast beliebig geformten Querschnitt haben und gegebenenfalls von einer - dünnwandigen - Büchse, z. B. aus Metall oder Kunststoff, mit derselben Querschnittsform gebildet werden, die mit dem elastischen Material fest verbunden ist.

In die Kammern können klauenartige Vorsprünge an den Flanschen eingreifen, von denen das Drehmoment eingeleitet bzw. in die das Drehmoment ausgeleitet wird. Ferner können in die Kammern beim Herstellen des Kupplungselementes Hülsen eingebaut werden, die zum wechselseitigen Befestigen des Kupplungselementes an den Flanschen dienen. Eine dreieckige Kammer kann einen genau so geformten Körper, z. B. aus Metall oder Kunststoff, enthalten, der mit den Bereichen aus elastischem Material fest verbunden ist, und der eine Bohrung enthält, die zum wechselseitigen Befestigen des Kupplungselementes an den Flanschen dient.

Die Kammern zum Einleiten des Drehmomentes wechseln mit den Kammern zum Ausleiten des Drehmomentes ab. Die Anzahl der Kammern in einem Kupplungselement ist stets geradzahlig; jedes Kupplungselement enthält insgesamt mindestens vier Kammern. Der Winkel - in Umfangsrichtung gemessen - zwischen den Kammerachsen beträgt bei vier Kammern jeweils 90 Grad; bei Belastung kann er über den belasteten Bereich aus elastischem Material bis zu etwa 12 Grad kleiner werden.

Bei dem erfindungsgemäßen Kupplungselement werden die Bereiche aus elastischem Material, durch die hindurch das Drehmoment übertragen wird, überwiegend auf Druck in Umfangsrichtung beansprucht, wenn diese Bereiche in Umfangsrichtung eine etwa konstante Breite und die dazwischen liegenden Kammern einen etwa dreieckigen Querschnitt haben. Die Breite der Bereiche mit elastischem Material kann mit zunehmendem Radius des Kupplungselementes auch kleiner werden. Die Kraftkomponenten in radialer Richtung nach außen sind klein oder gar nicht vorhanden.

Die Form der Bereiche aus elastischem Material, die Eigenschaften des elastischen Materials und die Form, Größe und Auswahl der Versteifungseinlagen beeinflussen die Kennlinie des Kupplungselementes; spezielle Konstruktionen in den Kammern werden dafür nicht benutzt.

Die Versteifungseinlagen sind im wesentlichen radial angeordnet; sie können vielfältig geformt sein. Sowohl einfache Streifen als auch verstrebte Netzwerke sind geeignet. Die Versteifungseinlagen können nach außen hin breiter werden, die Breite kann mit dem Radius des Kupplungselementes linear oder nichtlinear zunehmen. Die Form der Versteifungseinlagen kann an die Form der Kammern zum Ein- und Ausleiten des Drehmomentes angepaßt sein. Die Höhe der Versteifungseinlagen kann kleiner, gleich oder größer sein als die Höhe des Kupplungselementes. Die Versteifungseinlagen können andererseits von dem elastischen Material vollständig umschlossen sein.

Die Oberfläche der Versteifungseinlagen kann glatt, genarbt oder gerippt sein; bei nicht glatter Oberfläche ist die Verbundfläche zum elastischen Material größer als bei glatter Oberfläche.

Die einzelnen Versteifungseinlagen sind in dem gebrauchsfertigen Kupplungselement nur über das elastische Material miteinander verbunden, auch dann, wenn ein Bereich aus elastischem Material mehr als eine Versteifungseinlage enthält.

Die Anzahl der Versteifungseinlagen kann in dem Bereich aus elastischen Material, der auf der einen Seite einer Kammer liegt, anders sein als in dem Bereich aus elastischem Material, der auf der anderen Seite dieser Kammer liegt. Damit erhält das Kupplungselement für die beiden Richtungen des Drehmomentes unterschiedliche Kennlinien.

Die Verformbarkeit der Bereiche aus elastischem Material unter Einwirkung eines Drehmomentes wird mit zunehmender Breite und/oder zunehmender Anzahl der Versteifungseinlagen in einem Bereich aus elastischem Material geringer. Bei Unterteilung eines Bereiches aus elastischem Material in mehrere Schichten werden die Eigenschaften der eingesetzten Materialien sehr gleichmäßig ausgenutzt. Die streifenförmigen Versteifungseinlagen werden im wesentlichen auf Zug belastet, in den netzwerkartigen Versteifungseinlagen treten überwiegend Zug- und Druckkräfte auf, in dem elastischen Material überwiegend Druck- und Scherkräfte.

Alle Versteifungseinlagen, die für ein Kupplungselement benötigt werden, werden zunächst einstückig, bevorzugt im Spritzgußverfahren, hergestellt. Die Versteifungseinlagen werden zunächst durch Verbindungsbrücken zusammengehalten, bevorzugt durch die Angüsse, d. h. durch das Material, das in den Verteilerkanälen der Spritzgußform erstarrt ist. Dieser einstückige Körper kann einfach und präzise in der Form positioniert werden, in der er anschließend - unter Aussparen der Kammern oder Einlegen eines Körpers, z. B. aus Metall oder Kunststoff, in die Kammern zum Ein- und Ausleiten des Drehmonentes - mit elastischem Material umspritzt wird. Nach dem Vulkanisieren des elastischen Materials sind alle Versteifungseinlagen mit dem elastischen Material fest verbunden. Nun werden alle Verbindungsbrücken entfernt. In vielen Fällen genügt es, die Verbindungsbrücken abzubrechen; dazu ist es vorteilhaft, Sollbruchstellen vorzusehen, z. B. jeweils an den Übergangsstellen zwischen Verbindungsbrücke und Versteifungseinlage. Gegebenenfalls können die Verbindungsbrücken oder deren Reste nach einem bekannten Verfahren, z. B. Schleifen, entfernt werden. Damit sind sämtliche Versteifungseinlagen in einem Kupplungselement voneinander getrennt; sie werden ausschließlich von dem elastischen Material zusammengehalten.

Der Angußverteiler der Spritzgußform kann vielfältig geformt sein. Geeignet ist eine Angußspinne im Zentrum des Kupplungselementes oder ein ringförmiger Verteiler am Umfang des Kupplungselementes. Die Verbindungsbrücken können jedoch auch auf einer oder beiden Flachseiten des Kupplungselementes sitzen.

Die Versteifungseinlagen können aus faserverstärktem Kunststoff bestehen; die anisotropen Materialeigenschaften lassen sich im Spritzgußverfahren gezielt herstellen. Bei streifenförmigen Versteifungseinlagen und stirnseitiger Anspritzung liegen die Fasern im wesentlichen in Längsrichtung der Streifen, also in der späteren Hauptbelastungsrichtung.

Das erfindungsgemäße Kupplungselement und das erfindungsgemäße Herstellungsverfahren haben folgende Vorteile:
- Die zunächst einstückig hergestellten Versteifungseinlagen für ein Kupplungselement können auf einfache Weise von Hand oder automatisch in die Form eingelegt werden, in der sie mit elastischem Material umspritzt werden.
- Das aufwendige Einlegen von Fadenwickeln entfällt.
- Das zu übertragende Drehmoment belastet das elastische Material bevorzugt auf Druck, weniger auf Zug, und - bei nicht zylinderförmigen Kammern oder Büchsen - gleichmäßiger als bei den bekannten Kupplungselementen.
- Unterschiedliche Kennlinien des Kupplungselementes für die beiden Richtungen des Drehmomentes können auf einfache Weise erreicht werden; zusätzliche aufwendige Konstruktionselemente sind nicht erforderlich.
- Die Steifheit des Kupplungselementes kann auf einfache Weise in einem großen Bereich variiert werden.
- Kupplungselemente, die als haftvermittlerfreier Kunststoff-Kautschuk-Verbund oder Metall-Kautschuk-Verbund hergestellt werden, haben eine lange Gebrauchsdauer.
- Die Bereiche aus elastischem Material, durch die hindurch das Drehmoment übertragen wird, können auf einfache Weise entweder an eine vorgegebene Form der Kammern zum Ein- und Ausleiten des Drehmomentes angepaßt werden, oder sie werden entsprechend einer optimalen Verteilung der in ihnen auftretenden Kräfte geformt.
- Das Kupplungselement kann - bei großen Stückzahlen - in einem einzigen Kombinationswerkzeug hergestellt werden, falls die Zeiten zum Spritzen der zunächst einstückigen Versteifungseinlagen und zum Spritzen und Vulkanisieren des elastischen Materials nicht zu unterschiedlich sind.
- Die im Spritzgußverfahren zunächst einstückig hergestellten Versteifungseinlagen für ein Kupplungselement können durch Verbindungsbrücken zusammengehalten werden, die beim Spritzgußverfahren ohnehin erforderlich sind.
- Die Verbindungsbrücken zwischen den Versteifungseinlagen können fast ohne Aufwand entfernt werden.
- Ein vorläufiges Verbinden der Hülsen untereinander ist nicht erforderlich; ein Basisskelett ist nicht vorhanden.

Die Erfindung wird an Hand der Figuren weiter erläutert.

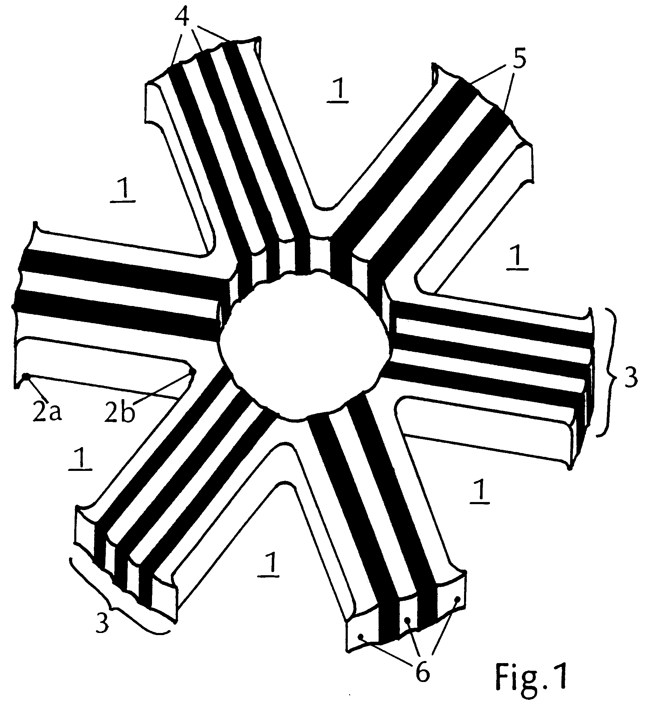

Figur 1 zeigt in Schrägansicht ein Kupplungselement in Form einer Zylinderringscheibe mit insgesamt sechs Kammern (1) mit abgerundeten Kanten (2a, 2b). Von den sechs Bereichen (3) aus elastischem Material enthalten drei Bereiche jeweils drei Versteifungseinlagen (4), damit abwechselnd die drei anderen Bereiche jeweils zwei Versteifungseinlagen (5). Die Bereiche aus elastischem Material (6) haben in ihrer radialen Ausdehnung praktische konstante Abmessungen.

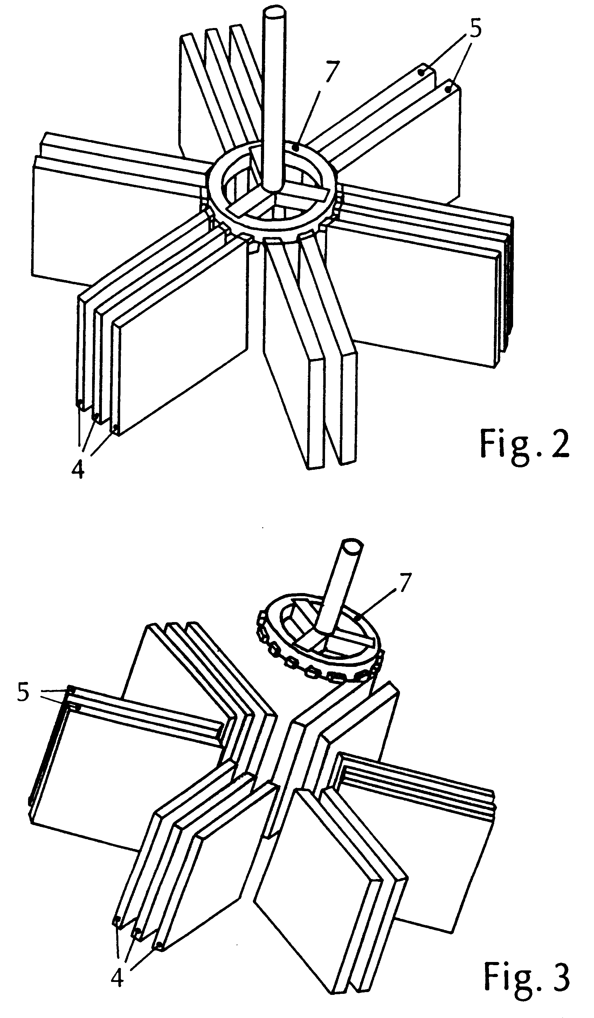

Figur 2 zeigt den einstückigen Körper, bestehend aus den Versteifungseinlagen (4, 5) für ein Kupplungselement entsprechend Figur 1, vor seinem Umspritzen mit elastischem Material. Alle 15 Versteifungseinlagen befinden sich in der Position relativ zueinander, die sie in dem damit herzustellenden Kupplungselement einnehmen. Sie werden durch eine Anguß-Spinne (7) zusammengehalten; diese ist angesetzt an einer inneren Schmalkante jeder Versteifungseinlage.

Figur 3 zeigt die von den Versteifungseinlagen (4, 5) entfernt dargestellte Anguß-Spinne (7); diese wird von den Versteifungseinlagen jedoch erst getrennt, nachdem die Versteifungseinlagen mit dem elastischen Material umspritzt und fest verbunden sind.

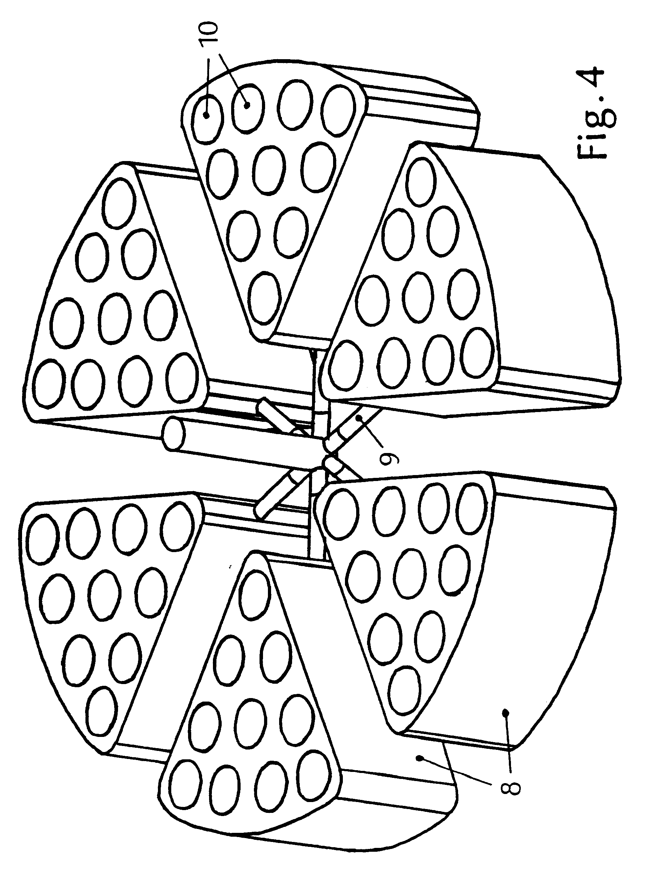

In Figur 4 ist ein einstückiger Körper dargestellt, bestehend aus sechs dreieckförmigen Versteifungseinlagen (8), die von einer Anguß-Spinne (9) in der Position relativ zueinander zusammengehalten werden, die sie in dem damit herzustellenden Kupplungselement einnehmen. Jede Versteifungseinlage ist mit zehn zylinderartigen Aussparungen (10) versehen.

In Figur 5 ist ein einstückiger Körper in Frontansicht dargestellt, bestehend aus vier Versteifungseinlagen (11) in Form eines verstrebten Netzwerkes. Diese werden durch einen außen liegenden ringförmigen Anguß (12) in der Position relativ zueinander gehalten, die sie in dem damit herzustellenden Kupplungselement einnehmen.

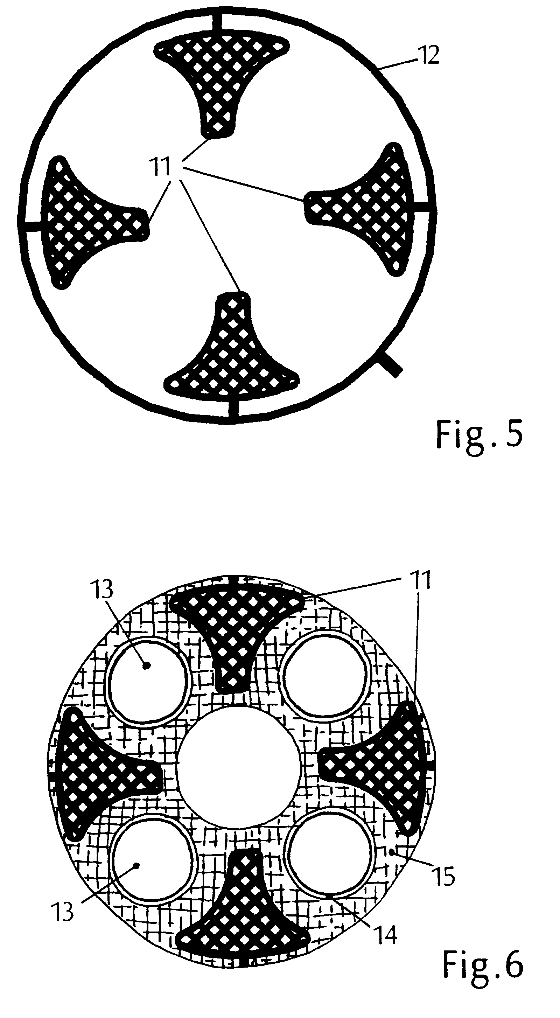

Figur 6 zeigt in Frontansicht ein Kupplungselement, das vier Versteifungseinlagen (11) nach Figur 5 enthält. Die vier Kammern (13) sind in diesem Fall zylinderförmig und werden von einer Büchse (14), z. B. aus Metall, begrenzt. Die vier Büchsen und die vier Versteifungseinlagen sind mit dem elastischen Material (15) fest verbunden.

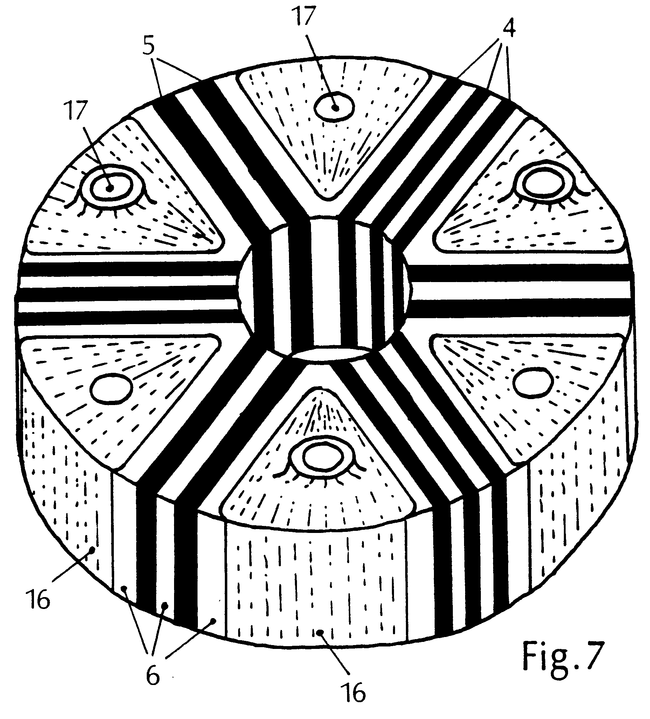

Figur 7 zeigt in Schrägansicht ein Kupplungselement, das mit dem in Figur 1 dargestellten Element vergleichbar ist. Die sechs Kammern enthalten jeweils einen metallischen etwa dreieckigen Körper (16) mit jeweils einer Bohrung (17); diese Körper sind mit dem elastischen Material (6) fest verbunden. Jeweils drei Körper ragen im Bereich der Bohrung wechselseitig auf einer Flachseite des Kupplungselementes über die Oberseite der elastischen Bereiche mit Verstärkungseinlagen hervor. Das Kupplungselement wird durch die Bohrungen mit den beiden Flanschen zum Einleiten und zum Ausleiten des Drehmomentes wechselseitig verschraubt.

### Beispiel für ein erfindungsgemäßes Kupplungselement

Ein Kupplungselement entsprechend Figur 7 hat folgende Abmessungen:

| | |
|---|---|
| Außendurchmesser | 120 mm |
| Innendurchmesser | 48 mm |
| Dicke der Scheibe | 40 mm |
| Breite der elastischen Bereiche | 25 mm |
| Dicke der Versteifungseinlagen aus Poly-phenylen-ether in den Bereichen mit drei Einlagen | 2 mm |
| in den Bereichen mit zwei Einlagen | 3 mm |

Das elastische Material besteht aus einer Mischung von NBR und SBR.

Die sechs Metallkörper in den Kammern bestehen aus Stahl. Mit diesem Kupplungselement lassen sich Drehmomente bis 700 Nm übertragen. Bei einem Drehmoment von 700 Nm, das durch die Bereiche aus elastischem Material mit drei Verstärkungseinlagen hindurch übertragen wird, sind Antriebs- und Abtriebsflansch um 8 Grad gegeneinander verdreht.

## Patentansprüche

1. Kupplungselemente zum Übertragen von Drehmomenten, bestehend aus mindestens zwei Kammern zum Einleiten und mindestens zwei Kammern zum Ausleiten des Drehmomentes, zwischen denen insgesamt mindestens vier Bereiche liegen, durch die hindurch das Drehmoment übertragen wird, gekennzeichnet durch
- Bereiche aus elastischem Material, wobei mindestens zwei Bereiche jeweils mindestens eine Versteifungseinlage enthalten, die mit dem elastischen Material fest verbunden ist.

2. Kupplungselemente nach Anspruch 1, gekennzeichnet durch
- Bereiche aus elastischem Material mit Versteifungseinlagen, die aus mehreren einzelnen Teilen bestehen, die mit dem elastischen Material fest verbunden sind.

3. Kupplungselemente nach den Ansprüchen 1 und 2, gekennzeichnet durch
- Bereiche aus elastischem Material mit Versteifungseinlagen aus Metall oder aus Kunststoff wie Polyamid, Polyolefin oder einem Harzsystem.

4. Kupplungselement nach den Ansprüchen 1 bis 3, gekennzeichnet durch
- Bereiche aus elastischem Material mit Versteifungseinlagen aus Poly-phenylen-ether.

5. Kupplungselement nach den Ansprüchen 1 bis 4, gekennzeichnet durch
- Bereiche aus elastischem Material wie vulkanisiertem Natur- und/oder Synthesekautschuk oder aus einem thermoplastischen Elastomeren.

6. Kupplungslement nach den Ansprüchen 1 bis 5, gekennzeichnet durch
- Bereiche aus elastischem Material wie vulkanisiertem Styrol-Butadien-Kautschuk, EPDM-Kautschuk oder Naturkautschuk und Versteifungseinlagen aus Poly-phenylen-ether, oder
- Bereiche aus einem thermoplastischen Elastomer und Versteifungseinlagen aus Polyamid oder Polypropylen.

7. Kupplungselement nach den Ansprüchen 1 bis 6, gekennzeichnet durch
- Bereiche aus elastischem Material mit streifenförmigen Versteifungseinlagen in bevorzugt radialer Anordnung.

8. Kupplungselement nach den Ansprüchen 1 bis 7, gekennzeichnet durch
- Bereiche aus elastischem Material mit Versteifungseinlagen in Form eines verstrebten Netzwerkes.

9. Kupplungselement nach den Ansprüchen 1 bis 8, gekennzeichnet durch
- Bereiche aus elastischem Material mit Versteifungseinlagen, die - je nach Richtung des Drehmomentes - in den Bereichen unterschiedlich verteilt sind.

10. Kupplungselement nach den Ansprüchen 1 bis 9, gekennzeichnet durch
- Bereiche aus elastischem Material mit mehreren streifenförmigen oder netzwerkartigen Versteifungseinlagen.

11. Kupplungselement nach den Ansprüchen 1 bis 10, gekennzeichnet durch
- Bereiche aus elastischem Material mit Versteifungseinlagen, deren Abmessung in Richtung des übertragenen Drehmomentes konstant ist oder mit zunehmendem Radius größer wird.

12. Kupplungselement nach den Ansprüchen 1 bis 11, gekennzeichnet durch
- Bereiche aus elastischem Material mit Versteifungseinlagen, bei denen in einer in Umfangsrichtung verlaufenden Schnittfläche das Verhältnis des Querschnitts von elastischem Material zum Querschnitt der Versteifungseinlagen von 1 zu 10 bis 10 zu 1 ist, bevorzugt von 1 zu 3 bis 3 zu 1.

13. Kupplungselement nach Anspruch 1, bestehend aus drei Kammern zum Einleiten und drei Kammern zum Ausleiten des Drehmomentes, zwischen denen insgesamt sechs Bereiche liegen, durch die hindurch das Drehmoment übertragen wird, gekennzeichnet durch
- Bereiche aus elastischem Material, das aus einer vulkanisierten Mischung von Naturkautschuk mit Styrol-Butadien-Kautschuk besteht, wobei drei Bereiche jeweils vier Schichten aus elastischem Material und drei streifenförmige Versteifungseinlagen enthalten, und damit abwechselnd drei Bereiche jeweils drei Schichten aus elastischem Material und zwei streifenförmige Versteifungseinlagen enthalten, und die Versteifungseinlagen aus Poly-phenylen-ether bestehen und mit dem elastischen Material fest verbunden sind.

14. Verfahren zum Herstellen eines Kupplungselementes nach Anspruch 1, gekennzeichnet durch
- Herstellen aller Versteifungseinlagen, die für ein Kupplungselement vorgesehen sind, als einstückigen Körper,
- wobei die Versteifungseinlagen zunächst durch Verbindungsbrücken zusammengehalten werden,
- Einlegen des einstückigen Körpers in das elastische Material unter Aussparen der Kammern oder Einlegen eines Körpers in die Kammern zum Ein- und Ausleiten des Drehmomentes und Vulkanisieren des elastischen Materials, wobei die Versteifungseinlagen mit dem elastischen Material fest verbunden werden,
- Abtragen der Verbindungsbrücken zwischen den Versteifungseinlagen.

15. Verfahren nach Anspruch 14, gekennzeichnet durch
- Herstellen aller Versteifungseinlagen, die für ein Kupplungselement vorgesehen sind, als einstückigen Körper im Spritzgußverfahren, wobei die Angüsse als Verbindungsbrücken verwendet werden.

16. Verfahren nach den Ansprüchen 14 und 15, gekennzeichnet durch
- Herstellen aller Versteifungseinlagen, die für ein Kupplungselement vorgesehen sind, als einstückigen Körper im Spritzgußverfahren, wobei in den Verbindungsbrücken Sollbruchstellen vorgesehen sind.
